# EUROPEAN PATENT APPLICATION

(11) **EP 3 623 216 A1**
(43) Date of publication of application: **18.03.2020**
(21) Application number: 18888842.4
(22) Date of filing: 04.12.2018
(51) Int. Cl.: B60P 1/28, B60P 1/34, B60W 30/04, B60W 40/072, B60W 40/105, G01C 21/26, B66F 3/35, B66F 3/46

(54) **DEVICE FOR CONTROLLING TILT OF TRUCK CARGO BOX BY USING NAVIGATION SYSTEM**

(30) Priority: 13.12.2017 KR 20170171243
(71) Applicant: Newkoadwind.,Co.Ltd, Gwangju 62416 (KR)
(72) Inventor: The designation of the inventor has not yet been filed
(74) Representative: Zardi, Marco
(86) International application number: PCT/KR2018/015261
(87) International publication number: WO 2019/117527

(57) **Abstract**

The present invention is directed to the provision of a device for controlling the tilt of a truck cargo box by using a navigation system, the device including: a cargo box tilt control device installed on top of the body of a truck; a cargo box installed on the cargo box tilt control device; a navigation system configured to provide information about the current vehicle location of the truck, the rotational radius (the curve level) of a travel target road, and vehicle travel speed; and a control unit configured to control the tilt of the cargo box on a curved runway by controlling the cargo box tilt control device based on information provided from the navigation system.

## Description

### Technical Field

The present invention relates to a device for controlling the tilt of a truck cargo box by using a navigation system, and more specifically to a device for controlling the tilt of a truck cargo box, which is intended to prevent an accident in which a truck carrying a cargo is overturned because the cargo box of the truck cannot withstand inertia on a steeply inclined road or the like.

### Background Art

In general, cargo vehicles (trucks) are loaded with cargos in their cargo boxes, and transport them long distances. The cargo boxes may have an open-top structure, or may be formed in a sealed box structure, such as a container box or wing body.

The trucks move long distances with their cargo boxes loaded with cargoes. Since the cargo boxes are fixed to the bodies of the trucks, there occur accidents in which the trucks are turned over and overturned by the inertia of the cargos loaded in the cargo boxes while running without slowing down their speeds on severe curves.

This causes a threat to a driver's safety as well as damage to a cargo, and thus it is natural that urgent solutions must be taken. Conventionally, a system for controlling a transportation vehicle by using a gyro sensor and a tilt sensor has been disclosed as in Korean Patent No. 1007910810000. However, since this is a method using the gyro sensor and the tilt sensor and is intended to solve the problem in which it is difficult to load and unload a container box at a desired place because a spreader is shaken by strong wind blowing from the ocean, this method is not a solution for the prevention of the overturning of a actual truck. Furthermore, since this method uses only the gyro sensor and the tilt sensor, it has a structure that cannot instantaneously reflect the actual travel speed of a truck and an actual curve level.

### [Related art document]

1. Korean Patent No. 1007910810000

### Disclosure

### Technical Problem

The present invention has been conceived to overcome the above-described problems, and an object of the present invention is to prevent an accident in which a truck carrying a cargo is overturned because it cannot withstand inertia on an inclined road or the like in such a manner that a cargo box is coupled to the body of the truck such that the tilt of the cargo box is variable and the tilt of the cargo box is adjusted by a cargo box tilt control device by using the curve level of a road and speed information provided by a navigation system.

### Technical Solution

In order to accomplish the above-described object, according to an embodiment of the present invention, there is provided a device for controlling the tilt of a truck cargo box by using a navigation system, the device including: a cargo box tilt control device installed on top of the body of a truck; a cargo box installed on the cargo box tilt control device; a navigation system configured to provide information about the current vehicle location of the truck, the rotational radius (the curve level) of a travel target road, and vehicle travel speed; and a control unit configured to control the tilt of the cargo box on a curved runway by controlling the cargo box tilt control device based on information provided from the navigation system.

According to embodiments of the present invention, the control unit includes a tilt calculation module configured to calculate the tilt of the cargo box based on the information about the current vehicle location, the rotational radius of the travel target road, and the vehicle travel speed provided from the navigation system, and a tilt control module configured to drive the cargo box tilt control device based on a result value calculated by the tilt calculation module.

According to an embodiment of the present invention, the cargo box tilt control device includes: an air compressor, a plurality of air bellows configured to be operated by high-pressure air supplied by the air compressor, air supply pipes configured to connect the air compressor to the air bellows, and an air distributor disposed at the center of the air supply pipes and configured to be driven by the control unit and to include a plurality of valves.

According to an embodiment of the present invention, the cargo box tilt control device includes known hydraulic jacks, hydraulic jacks configured to drive the hydraulic jacks, a hydraulic generator configured to provide hydraulic pressure to the hydraulic jacks, pipes configured to transfer hydraulic pressure, generated by the hydraulic generator, to the hydraulic jacks, and hydraulic jacks configured to distribute the hydraulic pressure to the hydraulic jacks.

According to an embodiment of the present invention, the center of the lower end of the cargo box and the center of the upper end of the body are coupled by a hinge shaft and the cargo box is configured to be rotatable to the left and right around the hinge shaft.

### Advantageous Effects

The effect of the above-described present invention is to minimize the overturning of a vehicle in such a manner that by means of the cargo box tilt control device and the control unit installed on top of the body of a truck, information about the current vehicle location of the truck, the rotational radius (curve level) of a travel target road, and vehicle travel speed is provided, calculation is performed, and the center of gravity of a cargo is moved by inclining the cargo box in a direction opposite to a direction in which centrifugal force acts when the vehicle travels along a curved road, thereby providing a considerably useful invention.

### Description of Drawings

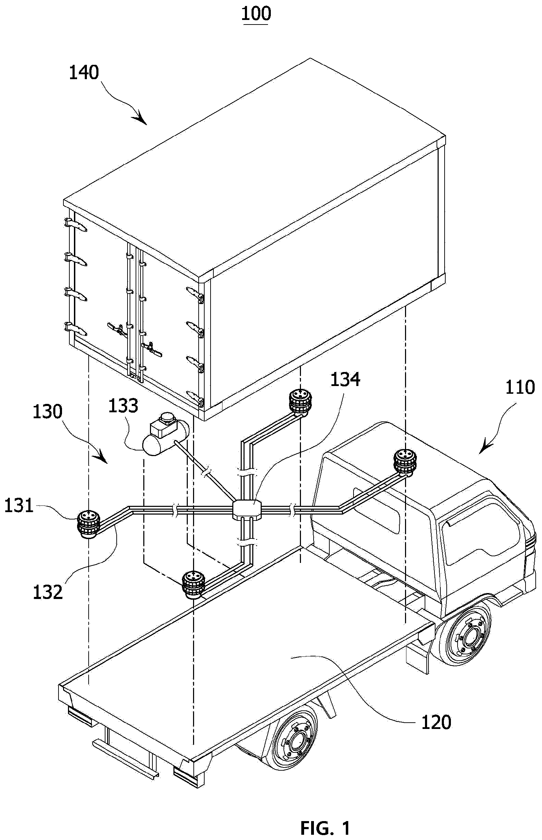

FIG. 1 is an exploded perspective view of a device for controlling the tilt of a truck cargo box by using a navigation system according to an embodiment of the present invention;

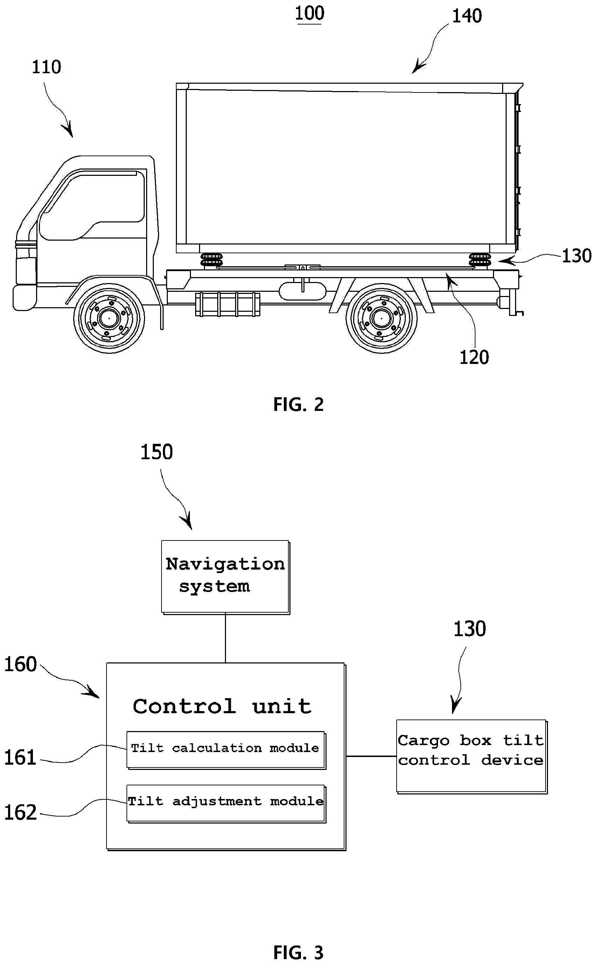

FIG. 2 is a side surface showing a state in which those of FIG. 1 are coupled to one another;
FIG. 3 is a diagram of the circuit configuration of the device for controlling the tilt of a truck cargo box according to the present invention;

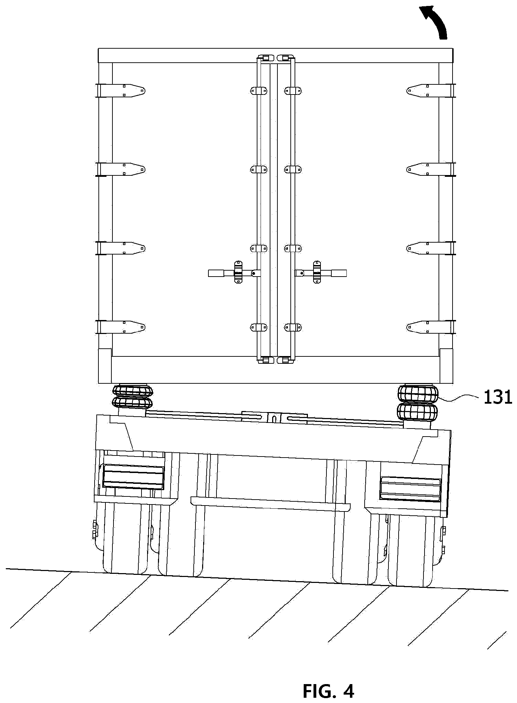

FIG. 4 is a reference view showing a state in which the present invention is used;

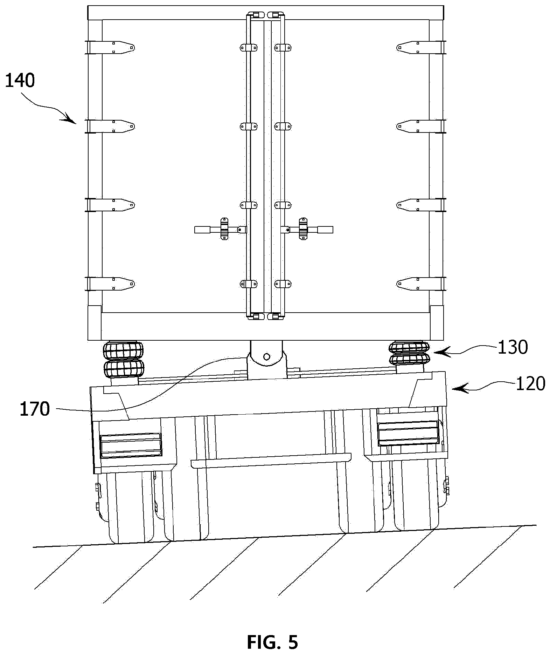

FIG. 5 is a reference view of a device for controlling the tilt of a truck cargo box by using a navigation system according to another embodiment of the present invention; and

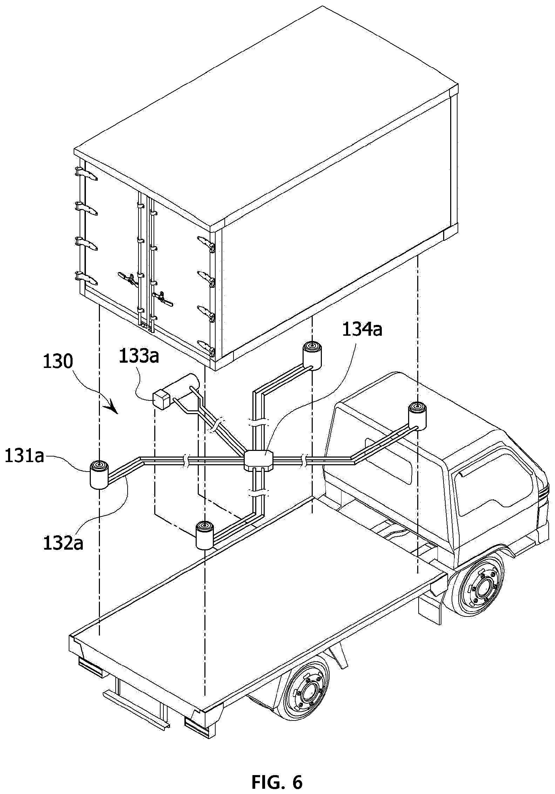

FIG. 6 is an exploded perspective view of a device for controlling the tilt of a truck cargo box by using a navigation system according to still another embodiment of the present invention.

### Best Mode

Embodiments of the present invention will be described in detail below with reference to the accompanying drawings so that those having ordinary skill in the art to which the present invention pertains can easily practice the present invention. However, the present invention may be implemented in various different forms, and is not limited to the embodiments described herein. In this case, the technical terms used herein are intended to merely describe specific embodiments, but are not intended to limit the present invention. Furthermore, each of singular expressions used herein includes a plural expression unless the context clearly indicates otherwise. The term "including" used herein means the materialization of a specific characteristic, region, integer, step, operation, element and/or component, and does not exclude the presence or addition of other specific characteristics, regions, integers, steps, operations, elements, components and/or groups. Unless defined otherwise, all terms used herein, including technical or scientific terms, have the same meanings as generally understood by those having ordinary skill in the art to which the present invention pertains. The terms identical to those defined in generally used dictionaries should be interpreted as having meanings suitable to the related art and the disclosed content, and are not interpreted as having ideal or excessively formal meanings unless they are definitely defined herein.

Embodiments of the invention that are described with reference to perspective views specifically illustrate ideal embodiments of the invention. As a result, various modifications of illustrations, e.g., the modifications of manufacturing methods and/or specifications, are expected. Accordingly, the embodiments are not limited to the specific forms of the regions shown, and the regions shown in the drawings are merely approximate in nature. The forms thereof are not intended to illustrate the exact forms of the regions, and are intended to limit the scope of the present invention.

Preferred embodiments of a device for controlling the tilt of a truck cargo box by using a navigation system according to the present invention will be described in detail below with reference to the accompanying drawings.

First of all, it should be noted that the same components or parts are denoted by the same reference symbols as much as possible. Furthermore, in the description of the present invention, detailed descriptions of related known functions or configurations will be omitted in order to prevent the gist of the present invention from being obscure.

As shown in the drawings, the present invention includes: a cargo box tilt control device 130 installed on top of the body 120 of a truck 110; a cargo box 140 installed on the cargo box tilt control device 130; a navigation system 150 configured to provide information about the current vehicle location of the truck 110, the rotational radius (the curve level) of a travel target road, and vehicle travel speed; and a control unit 160 configured to appropriately control the tilt of the cargo box 140 on a curved runway by controlling the cargo box tilt control device 130 based on information provided from the navigation system 150.

In this case, the control unit 160 includes a tilt calculation module 161 configured to calculate the tilt of the cargo box 140 based on the information about the current vehicle location, the rotational radius of the travel target road, and the vehicle travel speed provided from the navigation system 150, and a tilt control module 162 configured to drive the cargo box tilt control device 130 based on a result value calculated by the tilt calculation module 161.

When destination information is input from a user, the navigation system 150 calculates a travel path and a travel distance from a current location to a destination, and provides calculation results to a driver. The navigation system 150 includes a GPS module, and thus receives location information from artificial satellites. As described above, the navigation system 150 transfers GPS information to the control unit 160, and thus the control unit 160 can determine the current location of a vehicle.

The tilt calculation module 161 calculates the optimum tilt of the cargo box 140 suitable for a location in advance by taking into consideration the curve level of a curved target travel road and vehicle travel speed when a vehicle travels along a corresponding curved target travel road based on the current vehicle location, the rotational radius of the travel target road, and the vehicle travel speed information provided from the navigation system 150.

This is intended to incline the cargo box 140 in a direction opposite to a direction in which a centrifugal force acts by taking into consideration the speed of a vehicle and the rotational radius of a road. Accordingly, as the center of gravity of the cargo box 140 moves closer in the direction of centripetal force, the vehicle becomes more stable. Therefore, accidents in which the vehicle is overturned because it cannot withstand centrifugal force on a curved road may be minimized.

The tilt calculation module 161 calculates the most preferred tilt direction and tilt level of the cargo box 140, into which the rotational radius of the curved target travel road along which the vehicle is currently traveling is reflected, by analyzing the information about the current vehicle location, the rotational radius of the travel target road, and the travel speed of the vehicle.

A result value calculated by the tilt calculation module 161 is transferred to the tilt control module 162, and the cargo box tilt control device 130 is driven based on the result value, thereby adjusting the cargo box 140 to a desired tilt direction and tilt level.

The tilt calculation module 161 and the tilt control module 162 are implemented in the form of program instructions that can be executed via various computer means. Although the program instructions may be those specially designed and configured for the present invention, they may be known and available to those skilled in computer software.

The cargo box tilt control device 130 may include: an air compressor 133 configured to be used as an elevation means; a plurality of air bellows 131 configured to be operated by high-pressure air supplied by the air compressor 133; air supply pipes 132 configured to connect the air compressor to the air bellows; and an air distributor 134 disposed at a center of the air supply pipes and configured to be driven by the control unit 160 and to include a plurality of valves. In this case, it is preferable that solenoid valves be used as the valves. Alternatively, according to the present invention, the cargo box tilt control device 130 may include: well-known hydraulic jacks 131a; a hydraulic generator 133a configured to provide hydraulic pressure to the hydraulic jacks; pipes 132 configured to transfer hydraulic pressure, generated by the hydraulic generator 133a, to the hydraulic jacks; and a hydraulic distributor 134a configured to distribute the hydraulic pressure to the hydraulic jacks via valves driven by the control unit 160.

The center of the lower end of the cargo box 140 and the center of the upper end of the body 120 are coupled by a hinge shaft 170 and the cargo box 140 is configured to be rotatable to the left and right around the hinge shaft 170. In this case, elevation means are distributed and disposed on both sides of the hinge shaft 170. Accordingly, the load of the cargo box is distributed by the hinge shaft 170 and the elevation means 131 or 131a, and thus the load may be prevented from being concentrated to one side.

As described above, the present invention allows a cargo box to be inclined to an optimum state in a direction opposite to the direction of centrifugal force in response to the rotational radius of a traveling road, thereby preventing a vehicle from losing balance and being overturned.

### Mode for Invention

Although the present invention has been described by means of the limited embodiments above, the present invention is not limited thereto, and various modifications and alterations may be made by those having ordinary skill in the art to which the present invention pertains without departing from the technical spirit of the present invention and the equivalent range of the appended claims.

### Industrial Applicability

The present invention will be applicable to not only cargo vehicles but also automobiles and ships that run at high speeds.
- 110:: truck
- 120:: body
- 130:: cargo box tilt control device
- 140:: cargo box
- 150:: navigation system
- 160:: control unit
- 161:: tilt calculation module
- 162:: tilt control module

## Claims

1. A device for controlling a tilt of a truck cargo box by using a navigation system, the device comprising:
a cargo box tilt control device installed on top of a body of a truck;
a cargo box installed on the cargo box tilt control device;
a navigation system configured to provide information about a current vehicle location of the truck, a rotational radius (a curve level) of a travel target road, and vehicle travel speed; and
a control unit configured to control a tilt of the cargo box on a curved runway by controlling the cargo box tilt control device based on information provided from the navigation system.

2. The device of claim 1, wherein the control unit comprises a tilt calculation module configured to calculate the tilt of the cargo box based on the information about the current vehicle location, the rotational radius of the travel target road, and the vehicle travel speed provided from the navigation system, and a tilt control module configured to drive the cargo box tilt control device based on a result value calculated by the tilt calculation module.

3. The device of claim 1, wherein the cargo box tilt control device comprises: an air compressor, a plurality of air bellows configured to be operated by high-pressure air supplied by the air compressor, air supply pipes configured to connect the air compressor to the air bellows, and an air distributor disposed at the center of the air supply pipes and configured to be driven by the control unit and to include a plurality of valves.

4. The device of claim 1, wherein the cargo box tilt control device comprises hydraulic jacks, hydraulic jacks configured to drive the hydraulic jacks, a hydraulic generator configured to provide hydraulic pressure to the hydraulic jacks, pipes configured to transfer hydraulic pressure, generated by the hydraulic generator, to the hydraulic jacks, and hydraulic jacks configured to distribute the hydraulic pressure to the hydraulic jacks.

5. The device of claim 1, wherein a center of a lower end of the cargo box and a center of an upper end of the body are coupled by a hinge shaft and the cargo box is configured to be rotatable to a left and right around the hinge shaft.
